# EUROPÄISCHE PATENTSCHRIFT

(11) **EP 2 165 819 B1**
(45) Veröffentlichungstag und Bekanntmachung des Hinweises auf die Patenterteilung: **10.11.2010**
(21) Anmeldenummer: 08016681.2
(22) Anmeldetag: 23.09.2008
(51) Int. Cl.: B29C 47/08, F16H 3/26, B30B 11/24

(54) **Extruder-Anlage**
Extruder arrangement
Dispositif d'extrusion

(43) Veröffentlichungstag der Anmeldung: 24.03.2010
(73) Patentinhaber: Coperion GmbH, 70469 Stuttgart (DE)
(72) Erfinder: Davids, Ralf, Dipl.-Ing., 75428 Illingen (DE)
(74) Vertreter: Rau, Albrecht

(56) Entgegenhaltungen:
- DE-C1- 3 814 212
- US-A- 1 149 515
- US-A- 2 446 263

## Beschreibung

Die Erfindung betrifft eine Extruder-Anlage nach dem Oberbegriff des Anspruches 1.

Bei derartigen Extruder-Anlagen werden in der Praxis Schalt-Getriebe eingesetzt, auf deren Eingangs-Welle zwei Ritzel frei drehbar über Wälzlager abgestützt sind, die in Dauereingriff mit Zahnrädern stehen, die drehfest auf einer parallel zur Eingangs-Welle angeordneten Ausgangs-Welle angebracht sind. Zwischen den auf der Eingangs-Welle angeordneten Ritzeln ist eine Schalt-Muffe mittels einer Innenverzahnung drehfest mit der Eingangs-Welle gekoppelt. Durch Verschiebung in Längsrichtung der Eingangs-Welle kann das eine oder das andere Ritzel mittels der Schalt-Muffe drehfest mit der Eingangs-Welle verbunden werden. Das nicht mittels der Schalt-Muffe mit der Eingangs-Welle gekoppelte Ritzel führt eine relative Drehbewegung gegenüber der Eingangs-Welle aus. Hierdurch können Probleme im Bereich der die Ritzel gegenüber der Eingangs-Welle abstützenden Wälzlager und an der Schalt-Muffe auftreten. Der Grund liegt darin, dass die Wälzlager gegenüber der Eingangs-Welle bei hohen Drehzahlen unbelastet sind oder bei einer Relativ-Drehzahl Null hoch belastet sind. Auch die Schalt-Muffen weisen aufgrund der umlaufenden Radialbelastung hohen Verschleiß auf. Hinzu kommt, dass diese Systeme schwingungsempfindlich sein können.

Der Erfindung liegt daher die Aufgabe zugrunde, eine Extruder-Anlage der gattungsgemäßen Art so auszugestalten, dass Verschleiß-Belastungen in den Schalt-Getrieben weitgehend eliminiert werden.

Diese Aufgabe wird erfindungsgemäß durch die Merkmale im Kennzeichnungsteil des Anspruches 1 gelöst. Durch die erfindungsgemäßen Maßnahmen wird eine außerordentlich einfache Lösung gefunden, bei der hoch belastete, aber relativ stillstehende und unbelastete, aber rotierende Wälzlager vermieden werden. Da keine Schalt-Muffe vorhanden ist, werden die eingangs genannten Probleme vermieden. Durch den Fortfall der Schalt-Muffe wird weiterhin eine umlaufende Radialbelastung vermieden. Die Erfindung bezieht sich naturgemäß auch auf das Schalt-Getriebe als solches.

Durch die Ausgestaltung nach den Ansprüchen 2 und 3 muss das Doppel-Schalt-Ritzel in der ersten oder zweiten Schaltstellung nicht gesondert fixiert werden.

Die Maßnahmen nach den Ansprüchen 4 und 5 führen zu einer symmetrischen Belastung der Eingangs-Welle und der Ausgangs-Welle.

Die Betätigung des Doppel-Schalt-Ritzels lässt sich in besonders einfacher Weise nach den Ansprüchen 6 bis 8 realisieren.

Weitere Vorteile, Merkmale und Einzelheiten der Erfindung ergeben sich aus der nachfolgenden Beschreibung eines Ausführungsbeispiels anhand der Zeichnung. Es zeigt
- Fig. 1: eine schematische Darstellung einer Extruder-Anlage nach der Erfindung in teilweise geöffnetem Zustand in Draufsicht,
- Fig. 2: eine Seiten-Ansicht eines Schalt-Getriebes in geöffnetem Zu- stand,
- Fig. 3: eine Draufsicht auf das Schalt-Getriebe in einer ersten Schalt- stellung,
- Fig. 4: eine Draufsicht auf das Schalt-Getriebe in einer zweiten Schaltstellung,
- Fig. 5: eine schematische Darstellung der Extruder-Anlage in der ersten Schaltstellung des Schalt-Getriebes,
- Fig. 6: die Darstellung gemäß Fig. 5 in einer neutralen Schaltstellung des Schalt-Getriebes und
- Fig. 7: die Darstellung gemäß den Fig. 5 und 6 in der zweiten Schaltstellung des Schalt-Getriebes.

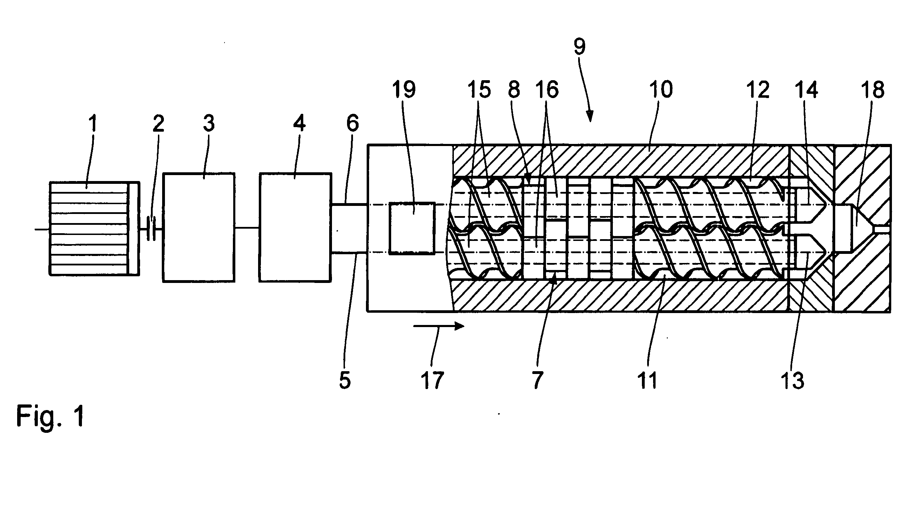

Die in Fig. 1 dargestellte Extruder-Anlage weist einen elektrischen Antriebs-Motor 1 auf, dem über eine Kupplung 2 ein Schalt-Getriebe 3 nachgeordnet ist. An das Schalt-Getriebe 3 schließt sich ein übliches Verteiler-Getriebe 4 an, aus dem zwei gleichsinnig drehende Abtriebswellen 5, 6 ausmünden, die mit den Schnecken-Wellen 7, 8 eines Extruders 9 gekoppelt sind. Der Extruder 9 weist ein Gehäuse 10 auf, in dem zwei 8-förmig ineinandergreifende Bohrungen 11, 12 ausgebildet sind, die koaxial mit den Achsen 13, 14 der Abtriebs-Wellen 5, 6 und der Schnecken-Wellen 7, 8 im Gehäuse 10 ausgebildet sind. Auf den Schnecken-Wellen 7, 8 sind jeweils paarweise Schneckenelemente 15 und Knet-Elemente 16 angeordnet. An dem in Förderrichtung 17 der Schnecken-Wellen 7, 8 stromabwärtigen Ende des Gehäuses 10 ist eine Austrags-Öffnung 18 für das im Extruder 9 behandelte, und benachbart zum Verteiler-Getriebe 4 durch einen Zuführ-Trichter 19 zugeführte Material vorgesehen. Bei dem Extruder 9 handelt es sich also um einen üblichen gleichsinnig drehenden, mit dicht kämmenden Schnecken-Wellen 7, 8 ausgebildeten Zweiwellen-Extruder.

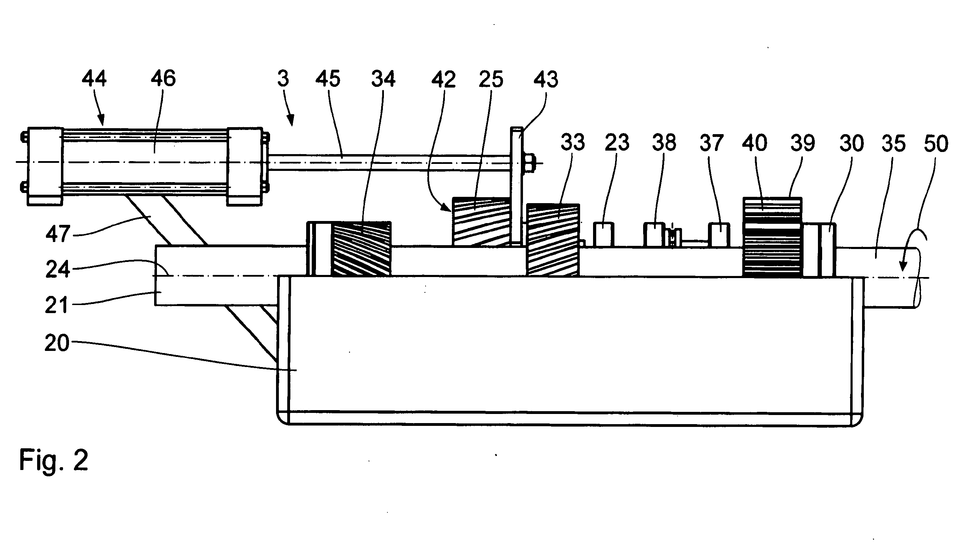

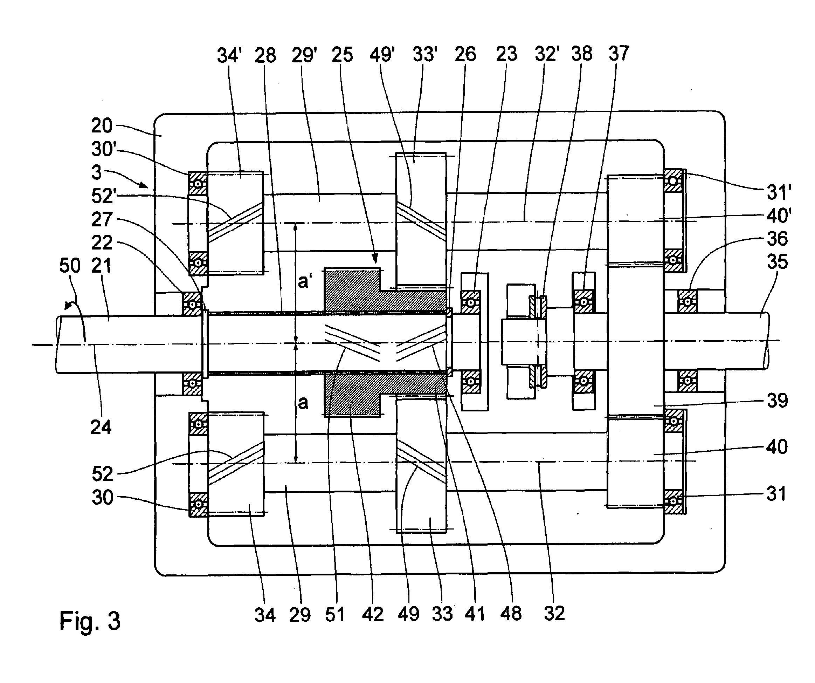

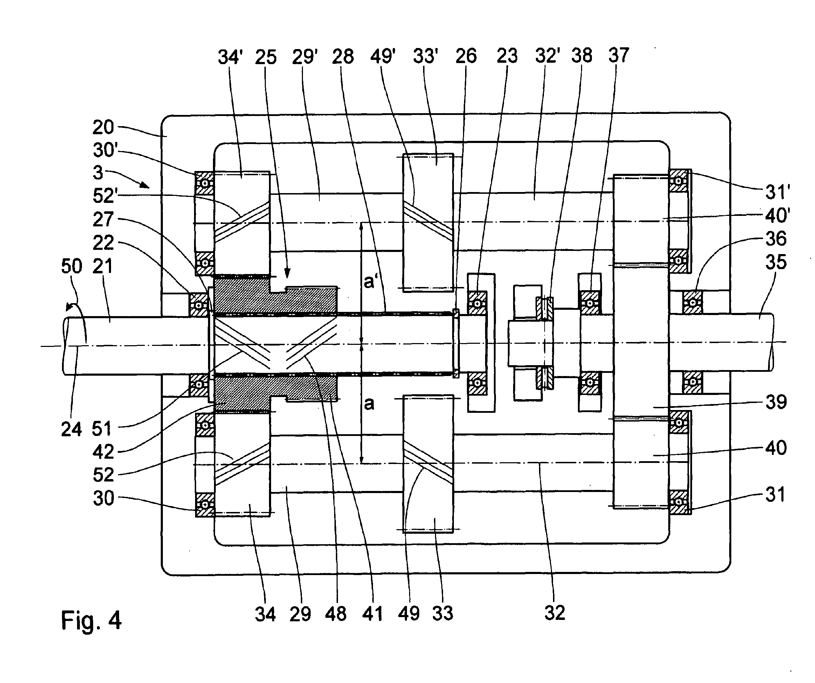

Das Schalt-Getriebe 3 weist ein Gehäuse 20 auf, in dem eine Eingangs-Welle 21 radial und axial mittels Wälzlagern 22, 23 drehbar, aber in Richtung ihrer Achse 24 unverschiebbar gelagert ist. Die Wälzlager 22, 23 stützen sich im Gehäuse 20 ab. Auf der Eingangs-Welle 21 ist ein Doppel-Schalt-Ritzel 25 zwischen zwei Schaltstellungen verschiebbar gelagert, auf die weiter unten noch eingegangen wird. Hierbei liegt das Doppel-Schalt-Ritzel 25 in einer ersten Schaltstellung, die in Fig. 2 und 3 etwa mittig dargestellt ist, gegen einen ersten Anschlag-Bund 26 an. In einer zweiten Schaltstellung gemäß Fig. 4 liegt es gegen einen zweiten Anschlag-Bund 27 an. Die Anschlag-Bunde 26, 27 sind fest mit der Eingangs-Welle 21 verbunden. Das Doppel-Schalt-Ritzel 25 ist zwischen den Anschlag-Bunden 26, 27 mittels einer Längs-Verzahnung 28 drehfest, aber in Richtung der Achse 24 verschiebbar auf der Eingangs-Welle 21 angeordnet.

Beiderseits der Eingangs-Welle 21 sind zwei Zwischen-Wellen 29, 29' mittels Wälzlagern 30, 30' und 31, 31' drehbar im Gehäuse 20 gelagert, deren Achsen 32, 32' in einer gemeinsamen Ebene mit der Achse 24 der Eingangs-Welle 21 liegen und von dieser einen Abstand a bzw. a' haben. Sie sind spiegelsymmetrisch und diametral zu der Achse 24 angeordnet. Es gilt also: a = a'.

Auf den Zwischen-Wellen 29, 29' sind etwa mittig entsprechend einer ersten Schaltstellung zwei erste Schalt-Zahnräder 33, 33' mit einem identischen Durchmesser D33 angeordnet. Weiterhin ist - zugeordnet zu der zweiten Schaltstellung - jeweils ein zweites Schalt-Zahnrad 34 bzw. 34' drehfest mit einem identischen Durchmesser D34 auf jeder Zwischen-Welle 29, 29' angeordnet.

Fluchtend mit der Achse 24 ist weiterhin eine Ausgangs-Welle 35 mittels Radial-Lagern 36, 37 und mittels eines Axial-Lagers 38 im Gehäuse 20 gelagert. Zwischen den beiden Radial-Lagern 36, 37 ist auf der Ausgangs-Welle 35 ein mittleres Ausgangs-Zahnrad 39 mit einem Durchmesser D39 drehfest angeordnet. In dieses Ausgangs-Zahnrad 39 greifen zwei Ausgangs-Zahnritzel 40, 40' ein, die jeweils drehfest auf der entsprechenden Zwischen-Welle 29, 29' angebracht sind und einen identischen Durchmesser D40 haben.

Das Schalt-Doppel-Ritzel 25 weist zwei einteilig miteinander ausgebildete Schaltritzel, nämlich ein erstes Schaltritzel 41 mit einem Durchmesser D41 und ein zweites Schaltritzel 42 mit einem Durchmesser D42 auf, die so ausgebildet sind, dass in der angesprochenen ersten Schaltstufe das erste Schaltritzel 41 in die beiden ersten Schalt-Zahnräder 33, 33' eingreift, während in der zweiten Schaltstufe das zweite Schaltritzel 42 in die zweiten Schalt-Zahnräder 34, 34' eingreift.

Zwischen den beiden Schaltritzeln 41, 42 greift eine Schalt-Gabel 43 am Doppel-Schalt-Ritzel 25 an. Eine Verstellung zwischen den beiden Schaltstufen und einer mittleren neutralen Schaltstellung erfolgt mittels eines Schalt-Antriebs 44, der durch einen hydraulisch beaufschlagbaren Kolben-Zylinder-Antrieb gebildet sein kann, dessen Kolbenstange 45 an der Schalt-Gabel 43 angreift und dessen Zylinder 46 gegenüber dem Gehäuse 20 mittels einer Stütze 47 ortsfest abgestützt ist. Der Schalt-Antrieb 44 ist als sogenannter Drei-Stellungs-Antrieb ausgebildet.

Die Schalt-Ritzel 41, 42 und die Schalt-Zahnräder 33, 33' und 34, 34' weisen jeweils eine Schräg-Verzahnung auf. Die Schräg-Verzahnung 48 des ersten Schalt-Ritzels 41 und entsprechend die Schräg-Verzahnungen 49, 49' der ersten Schalt-Zahnräder 33, 33' sind derart, dass bei einem Antrieb der Eingangs-Welle 21 in einer Drehrichtung 50 das Doppel-Schalt-Ritzel 25 gegen den ersten Anschlag-Bund 26 gedrückt wird. Demgegenüber sind die Schräg-Verzahnungen 51 des zweiten Schalt-Ritzels 42 und die Schräg-Verzahnungen 52, 52' der zweiten Schalt-Zahnräder 34, 34' derart, dass bei Drehantrieb der Eingangs-Welle 21 in Drehrichtung 50 das Doppel-Schalt-Ritzel 25 gegen den zweiten Anschlagbund 27 gedrückt wird. In beiden Schalt-Stellungen sind die Schalt-Gabel 43 und damit der Schalt-Antrieb 44 während des Last-Betriebs daher frei von Kräften in Richtung der Achse 24.

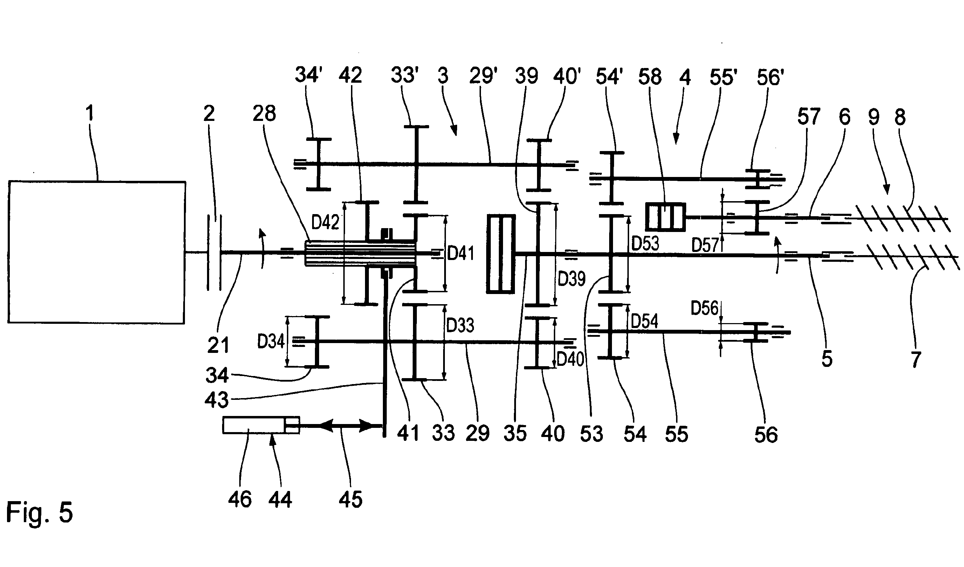

In den Fig. 5 bis 7 sind das Schalt-Getriebe 3 mit dem nachgeordneten Verteiler-Getriebe 4 in schematischer Form in den zwei Last-Schaltstellungen und einer neutralen Schaltstellung dargestellt.

In der in Fig. 5 dargestellten ersten Schaltstellung erfolgt der Antrieb von der Eingangs-Welle 21 über das erste Schalt-Ritzel 41 auf die ersten Schalt-Zahnräder 33, 33' und von diesen über die Zwischen-Wellen 29, 29' auf die Ausgangs-Zahnritzel 40, 40' und von diesen auf das Ausgangs-Zahnrad 39 und damit auf die Ausgangs-Welle 35. Die Ausgangs-Welle 35 führt direkt zur Abtriebs-Welle 5 des Verteiler-Getriebes 4. Die Ausgangs-Welle 35 ist im Verteiler-Getriebe 4 weiterhin mit einem drehfest angebrachten Verteiler-Zahnritzel 53 versehen, das mit zwei Verteiler-Zahnrädern 54, 54' auf zwei Verteiler-Wellen 55, 55' in Eingriff steht. Von diesen wird über je ein Verteiler-Abtriebs-Ritzel 56, 56' und ein mit der Abtriebs-Welle 6 drehfest verbundenes Verteiler-Abtriebs-Zahnrad 57 die Abtriebs-Welle 6 angetrieben, und zwar drehzahl- und drehrichtungsgleich zur Abtriebs-Welle 5. Die Verteiler-Wellen 55, 55' sind derart angeordnet, dass die Abtriebs-Ritzel 56, 56' beide in das Abtriebs-Zahnrad 57 eingreifen. Eine derartige Ausgestaltung eines Verteiler-Getriebes 4 ist beispielsweise aus der EP 0 962 298 B1 (entspr. US 6,106,426 B) bekannt. Selbstverständlich ist es insoweit auch möglich, wie es ebenfalls bekannt ist, dass die Verteiler-Zahnräder 54, 54' direkt in das Ausgangs-Zahnrad 39 eingreifen und mit diesem kämmen, also von diesem drehangetrieben werden. Dies kommt insbesondere dann in Betracht, wenn das Schalt-Getriebe und daher das Verteiler-Getriebe 4 zu einer Baueinheit zusammengefasst werden.

Damit die beiden Abtriebs-Wellen 5, 6 gleiche Drehzahlen haben, haben die Abtriebs-Ritzel 56, 56' und das Abtriebs-Zahnrad 57 in der Regel ungleiche Durchmesser D56 und D57, und auch das Verteiler-Zahnritzel 53 und die Verteiler-Zahnräder 54, 54' haben entsprechend ungleiche Durchmesser D53 und D54, wobei gilt: D53/D54 = D57/D56. Die Abtriebs-Welle 6 ist im Verteiler-Getriebe 4 mittels eines Axial-Lagers 58 abgestützt.

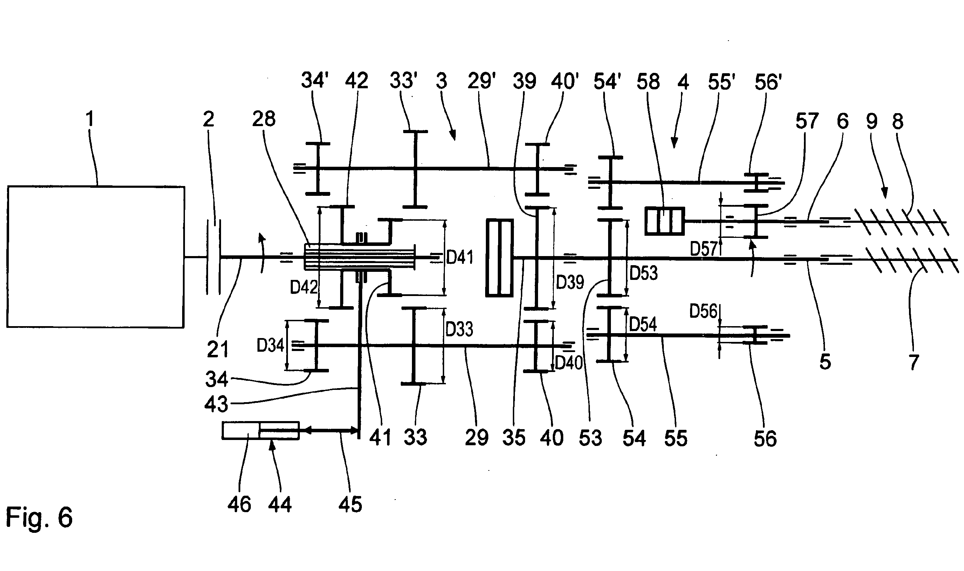

In der in Fig. 6 dargestellten neutralen Schaltstellung des Doppel-Schalt-Ritzels 25 befinden sich beide Schalt-Ritzel 41, 42 außer Eingriff mit den ihnen jeweils zugeordneten Schalt-Zahnräder 33, 33' bzw. 34, 34'. Es erfolgt also keine Drehmomentübertragung vom Antriebs-Motor 1 zum Extruder 9.

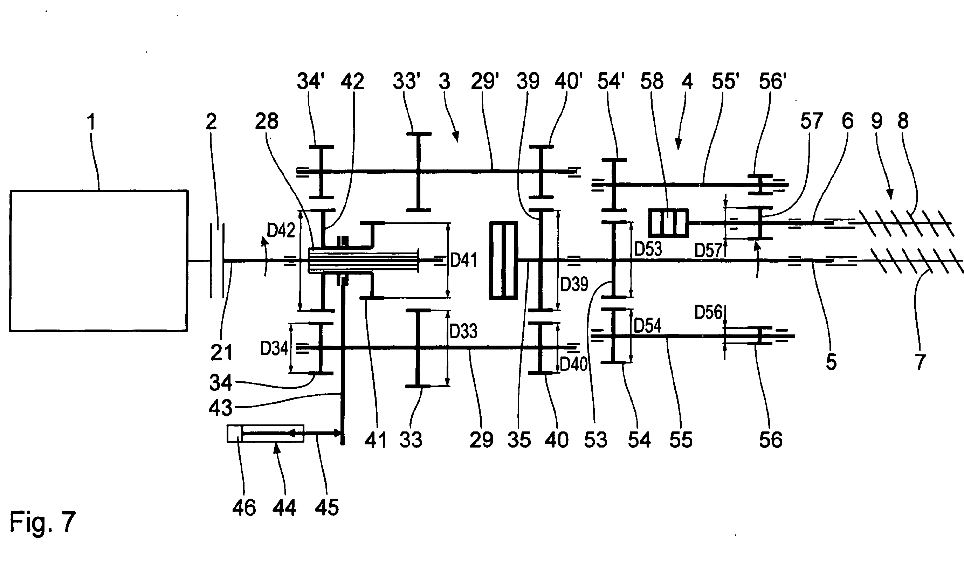

In der in Fig. 7 dargestellten zweiten Schaltstellung greift das zweite Schaltritzel 42 in die zweiten Schalt-Zahnräder 34, 34', wobei die Übernagung zum Extruder 9 in der geschilderten Weise vor sich geht.

Da der Durchmesser D41 des ersten Schalt-Ritzels 41 kleiner ist als der Durchmesser D42 des zweiten Schalt-Ritzels 42 und demzufolge die untereinander identischen Durchmesser D33 der ersten Schalt-Zahnräder 33, 33' größer sind als die ebenfalls untereinander identischen Durchmesser D34 der zweiten Schalt-Zahnräder 34, 34', ist in der ersten Schaltstufe die Abtriebsdrehzahl der Ausgangs-Welle 35 in der ersten Schaltstufe gemäß Fig. 5 niedriger als in der zweiten Schaltstufe gemäß Fig. 7. Es gilt: D41 + D33 = D42 + D34 = D39 + D40 = a = a', wobei a gleich dem Abstand der Achsen 24 und 32 voneinander und a' gleich dem Abstand der Achsen 24 und 32' voneinander ist.

## Patentansprüche

1. Extruder-Anlage
- mit einem Antriebs-Motor (1),
- mit einem Schalt-Getriebe (3),
-- das mit einer Eingangs-Welle (21) mit dem Antriebs-Motor (1) gekoppelt ist,
-- das eine Ausgangs-Welle (35) aufweist und
-- das mit einer ersten Schaltstellung und einer zweiten Schaltstellung ausgebildet ist,
- mit einem Extruder (9),
-- dessen mindestens eine Schnecken-Welle (7, 8) mit der Ausgangs-Welle (35) in Dreh-Antriebsverbindung steht,
**dadurch gekennzeichnet,**
**dass** auf der Eingangs-Welle (21) ein Doppel-Schalt-Ritzel (25) gegenüber der Eingangs-Welle (21) undrehbar zwischen der ersten und der zweiten Schaltstellung verschiebbar angeordnet ist,
**dass** das Doppel-Schalt-Ritzel (25) ein erstes Schalt-Ritzel (41) und ein zweites Schalt-Ritzel (42) unterschiedlichen Durchmessers (D41) und (D42) aufweist,
**dass** achsparallel zur Eingangs-Welle (21) mindestens eine Zwischen-Welle (29, 29') drehbar angeordnet ist,
**dass** auf der Zwischen-Welle (29, 29') ein erstes Schalt-Zahnrad (33, 33') und ein zweites Schalt-Zahnrad (34, 34') drehfest und axial unverschiebbar angeordnet sind,
**dass** wahlweise das erste Schalt-Ritzel (41) mit dem ersten Schalt-Zahnrad (33, 33') oder das zweite Schalt-Ritzel (42) mit dem zweiten Schalt-Zahnrad (34, 34') in Eingriff bringbar ist und
**dass** die mindestens eine Zwischen-Welle (29, 29') mit der Ausgangs-Welle (35) in Dreh-Antriebsverbindung steht.

2. Extruder-Anlage nach Anspruch 1, **dadurch gekennzeichnet,**
**dass** die Eingangs-Welle (21) mit einem ersten Anschlag-Bund (26) versehen ist und
**dass** das erste Schalt-Ritzel (41) mit einer derartigen Schräg-Verzahnung (48) versehen ist, dass es in der ersten Schaltstellung bei einem Antrieb in einer Drehrichtung (51) gegen den ersten Anschlag-Bund (26) gedrückt wird.

3. Extruder-Anlage nach Anspruch 1, **dadurch gekennzeichnet,**
**dass** die Eingangs-Welle (21) mit einem zweiten Anschlag-Bund (27) versehen ist und
**dass** das zweite Schalt-Ritzel (42) mit einer derartigen Schräg-Verzahnung (48) versehen ist, dass es in der zweiten Schaltstellung bei einem Antrieb in einer Drehrichtung (52) gegen den zweiten Anschlag-Bund (27) gedrückt wird.

4. Extruder-Anlage nach Anspruch 1, **dadurch gekennzeichnet,**
**dass** zwei Zwischen-Wellen (29, 29') vorgesehen sind, die einander diametral gegenüberliegen und die jeweils erste Schalt-Zahnräder (33, 33') und zweite Schalt-Zahnräder (34, 34') aufweisen.

5. Extruder-Anlage nach Anspruch 4, **dadurch gekennzeichnet,**
**dass** die Zwischen-Wellen (29, 29') jeweils mit einem Ausgangs-Zahnritzel (40, 40') versehen sind, die mit einem auf der Ausgangs-Welle (35) drehfest angebrachten Ausgangs-Zahnrad (39) in Eingriff stehen.

6. Extruder-Anlage nach Anspruch 1, **dadurch gekennzeichnet,**
**dass** das Doppel-Schalt-Ritzel (25) zwischen der ersten Schaltstellung und der zweiten Schaltstellung eine neutrale Schaltstellung einnimmt.

7. Extruder-Anlage nach Anspruch 1, **dadurch gekennzeichnet,**
**dass** das Doppel-Schalt-Ritzel (25) mit einem Schalt-Antrieb (44) in Verbindung steht.

8. Extruder-Anlage nach Anspruch 7, **dadurch gekennzeichnet,**
**dass** der Schalt-Antrieb (44) als Drei-Stellungs-Antrieb ausgebildet ist.

## Claims

1. Extruder system
- with a drive motor (1),
- with a switching gear (3),
-- which is coupled with an input shaft (21) to the drive motor (1),
-- which comprises an output shaft (35) and
-- which is designed with a first switching position and a second switching position,
- with an extruder (9),
-- whose at least one spiral shaft (7, 8) is in rotary drive connection with the output shaft (35),
**characterised in that**
on the input shaft (21) a double switching pinion (25) is arranged displaceably relative to the input shaft (21) non-rotatably between the first and the second switching position,
**in that** the double switching pinion (25) comprises a first switching pinion (41) and a second switching pinion (45) with different diameters (D41) and (D42), **in that** axially parallel to the input shaft (21) at least one intermediate shaft (29, 29') is arranged rotatably,
**in that** on the intermediate shaft (29, 29') a first switching gearwheel (33, 33') and a second switching gearwheel (34, 34') are arranged to be non-rotatable and axially non-displaceable,
**in that** optionally the first switching pinion (41) can be moved into engagement with the first switching gearwheel (33, 33') or the second switching pinion (42) can be moved into engagement with the second switching gearwheel (34, 34') and
**in that** the at least one intermediate shaft (29, 29') is in rotary drive connection with the output shaft (35).

2. Extruder system according to claim 1, **characterised in that** the input shaft (21) is provided with a first stop collar (26) and
**in that** the first switching pinion (41) is provided with such an oblique toothing (48) that in the first switching position with a drive it is pushed in a rotational direction (51) against the first stop collar (26).

3. Extruder system according to claim 1, **characterised in that** the input shaft (21) is provided with a second stop collar (27) and **in that** the second switching pinion (42) is provided with such an oblique toothing (48) that in the second switching position with a drive it is pushed in a rotational direction (52) against the second stop collar (27).

4. Extruder system according to claim 1, **characterised in that** two intermediate shafts (29, 29') are provided which are opposite one another diametrically and comprise the first switching gearwheels (33, 33') and second switching gearwheels (34, 34').

5. Extruder system according to claim 4, **characterised in that** the intermediate shafts (29, 29') are each provided with an output tooth pinion (40, 40'), which are in engagement with an output gearwheel (39) attached non-rotatably on the output shaft (35).

6. Extruder system according to claim 1, **characterised in that** the double switching pinion (25) adopts a neutral switching position between the first switching position and the second switching position.

7. Extruder system according to claim 1, **characterised in that** the double switching pinion (25) is in connection with a switching drive (44).

8. Extruder system according to claim 7, **characterised in that** the switching drive (44) is designed as a three position drive.

## Revendications

1. Dispositif d'extrusion
- avec un moteur d'entraînement (1),
- avec un engrenage de manoeuvre (3),
-- qui est couplé par un arbre d'entrée (21) au moteur d'entraînement (1),
-- qui présente un arbre de sortie (35) et
-- qui est réalisé avec une première position de manoeuvre et une seconde position de manoeuvre,
- avec une extrudeuse (9),
-- dont au moins un arbre à vis (7, 8) se trouve en liaison d'entraînement rotatif avec l'arbre de sortie (35),
**caractérisé en ce que**
sur l'arbre d'entrée (21) est disposé de manière mobile un double pignon de manoeuvre (25) de manière non rotative par rapport à l'arbre d'entrée (21) entre la première et la seconde positions de manoeuvre,
le double pignon de manoeuvre (25) présente un premier pignon de manoeuvre (41) et un second pignon de manoeuvre (42) de différent diamètre (D41) et (D42),
au moins un arbre intermédiaire (29, 29') est disposé de manière rotative parallèlement à l'axe par rapport à l'arbre d'entrée (21),
sur l'arbre intermédiaire (29, 29') sont disposées de manière solidaire en rotation et immobile axialement une première roue dentée de manoeuvre (33, 33') et une seconde roue dentée de manoeuvre (34, 34'),
au choix le premier pignon de manoeuvre (41) peut être amené en engagement avec la première roue dentée de manoeuvre (33, 33') ou le second pignon de manoeuvre (42) avec la seconde roue dentée de manoeuvre (34, 34') et
l'au moins un arbre intermédiaire (29, 29') se trouve en liaison d'entraînement rotatif avec l'arbre de sortie (35).

2. Dispositif d'extrusion selon la revendication 1, **caractérisé**
**en ce que** l'arbre d'entrée (21) est pourvu d'un premier collet de butée (26) et
**en ce que** le premier pignon de manoeuvre (41) est pourvu d'une telle denture hélicoïdale qu'il est pressé dans la première position de manoeuvre pour un entraînement dans un sens de rotation (51) contre le premier collet de butée (26).

3. Dispositif d'extrusion selon la revendication 1, **caractérisé**
**en ce que** l'arbre d'entrée (21) est pourvu d'un second collet de butée (27) et
**en ce que** le second pignon de manoeuvre (42) est pourvu d'une telle denture hélicoïdale (48) qu'il est pressé dans la seconde position de manoeuvre pour un entraînement dans un sens de rotation (52) contre le second collet de butée (27).

4. Dispositif d'extrusion selon la revendication 1, **caractérisé en ce que** deux arbres intermédiaires (29, 29') sont prévus, lesquels sont diamétralement opposés et présentent chacun des premières roues dentées de manoeuvre (33, 33') et des secondes roues dentées de manoeuvre (34, 34').

5. Dispositif d'extrusion selon la revendication 4, **caractérisé en ce que** les arbres intermédiaires (29, 29') sont pourvus chacun d'un pignon denté de sortie (40, 40'), lesquels pignons se trouvent en engagement avec une roue dentée de sortie (39) montée de manière solidaire en rotation sur l'arbre de sortie (35).

6. Dispositif d'extrusion selon la revendication 1, **caractérisé en ce que** le double pignon de manoeuvre (25) occupe une position de manoeuvre neutre entre la première position de manoeuvre et la seconde position de manoeuvre.

7. Dispositif d'extrusion selon la revendication 1, **caractérisé en ce que** le double pignon de manoeuvre (25) se trouve en liaison avec un entraînement de manoeuvre (44).

8. Dispositif d'extrusion selon la revendication 7, **caractérisé en ce que** l'entraînement de manoeuvre (44) est réalisé comme un entraînement à trois positions.
